Europäisches Patentamt

European Patent Office

Office européen des brevets

(19)

(11) Publication number: **0 140 388 B1**

# EUROPEAN PATENT SPECIFICATION

(45) Date of publication of patent specification: **08.05.91**

(51) Int. Cl.⁵: **G07F 7/10**, H04L 9/00, G06F 15/30

(21) Application number: **84113149.3**

(22) Date of filing: **31.10.84**

(54) **Pocket terminal, method and system for secured banking transactions.**

(30) Priority: **31.10.83 US 547207**

(43) Date of publication of application:
**08.05.85 Bulletin 85/19**

(45) Publication of the grant of the patent:
**08.05.91 Bulletin 91/19**

(84) Designated Contracting States:
**CH DE FR GB IT LI**

(56) References cited:
**EP-A- 0 063 794**
**WO-A-81/02655**

(73) Proprietor: **Atalla Corporation**
**2363 Bering Drive**
**San Jose California 95131(US)**

(72) Inventor: **Atalla, Martin M.**
**18 Monte Vista**
**Atherton, CA. 94025(US)**

(74) Representative: **Liesegang, Roland, Dr.-Ing.**
**FORRESTER & BOEHMERT Widenmayer-**
**strasse 4 Postfach 22 01 37**
**W-8000 München 22(DE)**

Description

Funds are commonly transferred electronically between banking institutions using encrypted messages transmitted over secured communication channels. Numerous encoding schemes and interactive message procedures are known which can be used to substantially assure faithful transmission of unaltered funds-transfer messages between institutions. However, these funds-transfer schemes typically are inadequately secure to protect against unauthorized transfer instructions over voice-grade telephone lines, and are typically not suitable for use by a great many individuals having their own computer-based terminals. One known technique establishes a portable banking terminal, as described in the literature (see, for example, U. S. Patent Application Serial No. 514,011), and such technique then permits transfers and withdrawals between a banking institution and the portable terminal.

The document EP-A-0 063 794 relates to a device for controling the identity of a user by utilizing a personal identification and a verification in combination with encrypting or decrpyting principles. A terminal and a station are connected by a communication system, which may use unsecured data channels. The terminal is provided with a central processing unit having a data memory, a scanner for reading data from a data card, an input device for the input of a personal identification information and an encrypting module. The encrypting module is adapted to encrypt or decrypt data from the data memory under control of the central processing unit. The station further comprises a central processing unit having a data memory and an encrypting module. The station is also provided with a comparator device for comparing the personal identification information and a personal verification information. Both kinds of information are transmitted from the terminal to the station. The encrypting procedure is carried out by encoding data of a verification feature and a key together with a network key and to form a temporary key and a message code. Personal data, the first encrypting message, the temporary key and the message code are further encrypted in the terminal, and this message is transmitted to a station via a communication system. The message received is decrypted in the station, features and verification information are compared, and a transaction is carried out upon favorable comparison.

However, this known device and the known method are not reliably secured against altering information during transmitting it over the communication system or against unauthorized use of information during a later session.

It is the object of the invention to improve the known method and device for securely communicating transaction information to an entity at one location from a user assigned to an identified terminal at a remote location using unsecured communication channels, so that altered information and unauthorized accessed during a later session can be recognized.

This object is solved by the method according to claim 1 and the system according to claim 5. Preferred embodiments are mentioned in the respective subclaims.

In accordance with the present invention, an improved security-encoded funds-transferring system, method and apparatus are provided which enable a user to transmit in secured manner selected funds-transfer instructions to a banking institution using unsecured communication channels such as telephone, mail, telegram and the like. Encrypted messages may be sent to the banking institution based upon internal key codes, personal identification numbers, and other unique inputs, and the banking institution may acknowledge the faithful reception of the unaltered, authorized instructions by returning an encrypted message that indicates favorable reception of, and action upon, the encrypted message originally transmitted.

Figure 1 is a block diagram illustrating one embodiment of the portable terminal and bank terminal according to the present invention; and

Figure 2 is a flow chart illustrating the operation of the present invention.

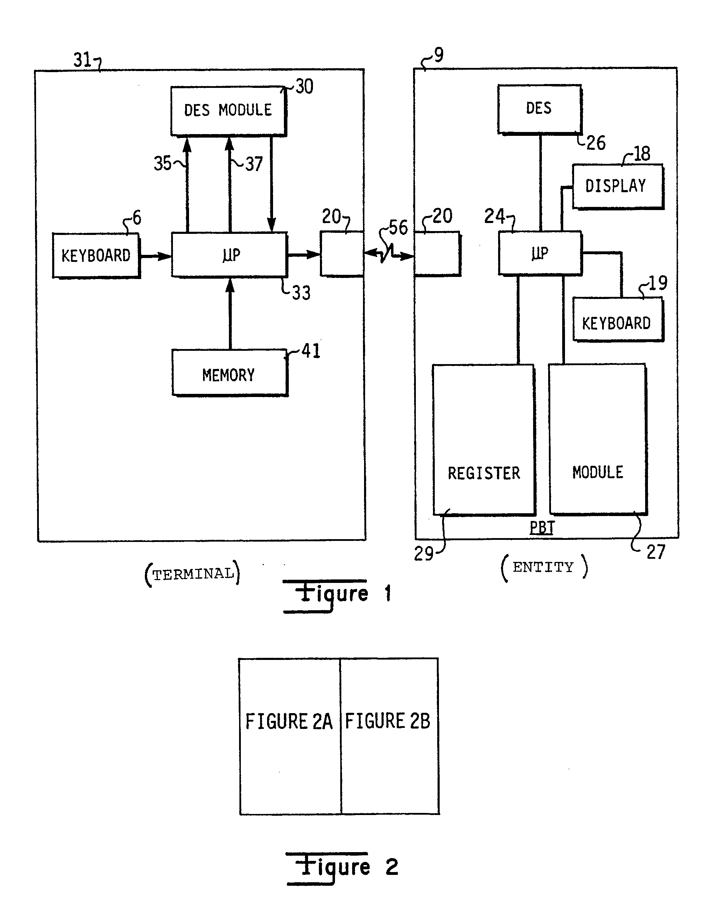

Referring now to the pictorial block diagram of Figure 1, there is shown a portable terminal 9 which includes a microprocessor 24 centrally connected to operate with a keyboard 19, a display unit 18, a Data Encryption Standard encoder/decoder 26, and memory means 27 and 29. The terminal 9 may include optional connector 20 for attachment to voice-grade telephone communication channels 56 via a conventional, modular four-wire telephone connector. Alternatively, an unsecured communication channel 56 may simply transmit transaction information to a banking institution as mail or telephone data for manual entry. Additionally, the terminal 9 includes a random-number generator 10 which, of course, may be performed in conventional manner by the microprocessor-controlled 24 selection of feedback paths around successive logic cells of a shift register 29, as described in the literature.

It is convenient to consider three phases of operation of the terminal 9. First, at the time of manufacture, each terminal 9 is provided with a unique Terminal Identification Code ("TIC", herein) established in known manner (for example, using Electronically Programmable Read-Only Memory, "EPROM", herein) and stored in memory means 27. This terminal identification number or code can be accessed in the operating routine of the terminal 9 without direct control or intervention by a user.

Second, the banking institution which furnishes the portable banking terminal 9 has a Security-Initialization Unit 31 ("SIU", herein) that couples to a terminal 9 via connectors 20, as shown in Figure 1, for permanently and irretrievably injecting an encrypted message (a Key-Exchange Key, "KEK", herein) into the memory means 27 of the terminal 9. This may be accomplished under control of the microprocessor 33 which operates in master/controller relationship to microprocessor 24 of terminal 9 to introduce the KEK into the EPROM-type memory means 27. At the same time, the banking institution compiles a listing in memory 41 of all terminals 9, their terminal identification codes, the Personal Identification Number ("PIN", herein) for the assigned user, and the associated KEK for on-line operation, as later described. The listing by the bank may, of course, be encrypted in known manner using a secured bank key for enhanced security against unauthorized operations of the system by bank personnel.

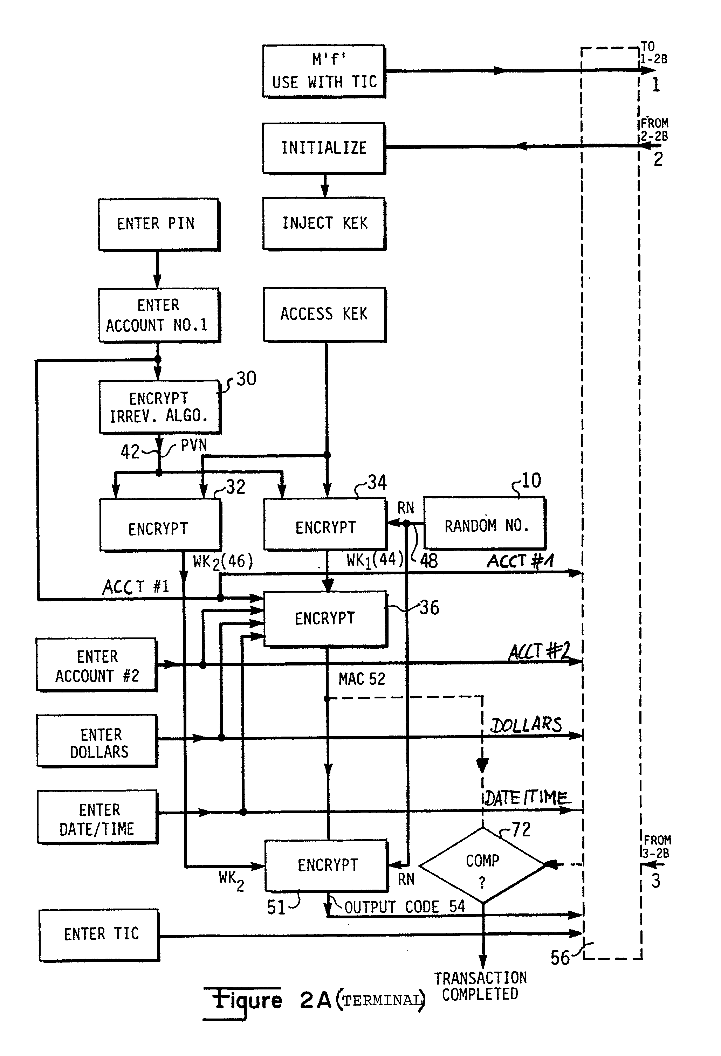

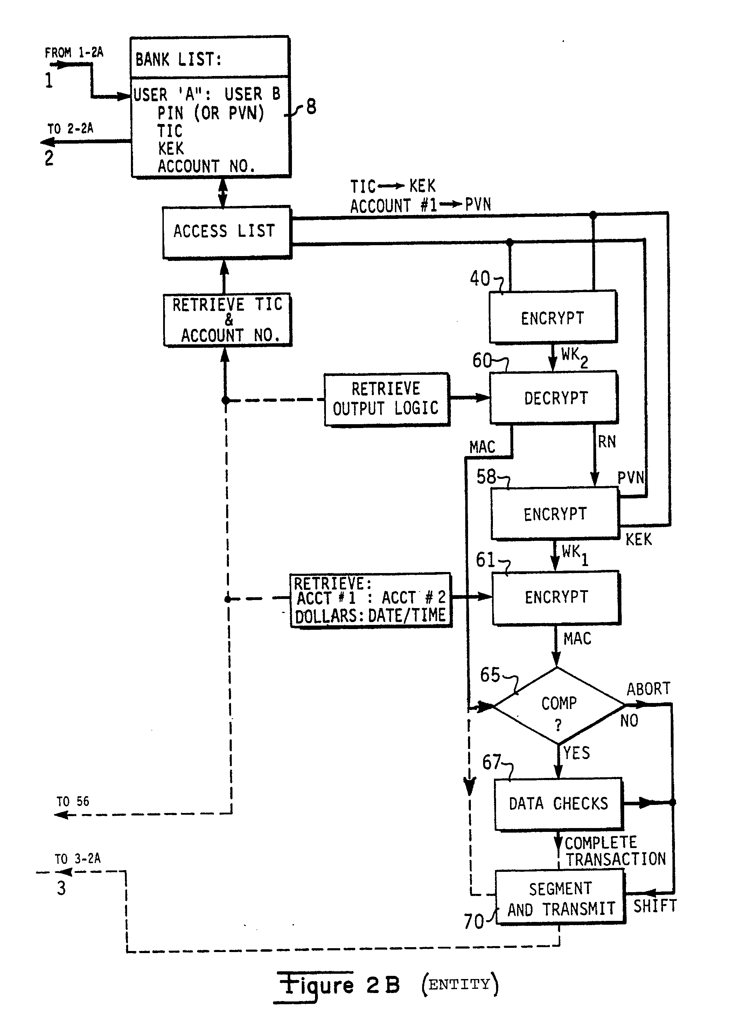

Third, a terminal 9 thus initialized with a Terminal Identification Code and a Key-Exchange Key may now be operated off-line by the assigned user, as illustrated in the flow diagram of Figure 2. The user A of the terminal 9 which was assigned to him in the initialization process now enters his PIN and his account number (#1) via keyboard 19, and activates the terminal 9 to encrypt these numbers in the DES module 26 under control of microprocessor 24 using an irreversible algorithm 30 of the type described in the literature (see, for example, U. S. Patent 3,938,091) to produce a Personal Verification Number 42. The PVN is now encrypted in the DES module 26 with the KEK (which was previously injected into the memory means of the terminal 9) and a random number 48 that is generated 10 by the terminal 9 in the manner previously described. The resulting encrypted code word 44 is the Working Key$_1$. In addition, the PVN and the KEK are again encrypted in the DES module 26 (without the random number 48) to produce an encrypted code word 46 as Working Key$_2$.

Now the user A may identify the number of the account (#2) to which he desires to have funds transferred (in one embodiment, the terminal 9 may be regarded as having an account number separate from the account at the banking institution). In addition, User A enters the number of dollars to be transferred from account #1 to account #2 and other sequential data such as date and time of the transaction (as a basis for securing against the same transaction being duplicated at a later time). This data is encrypted in DES module (26, 36) with WK$_1$ to yield a Message Authentication Code ("MAC", herein) 52 which may include, say, the most-significant 32 bits of a 64-bit output code. This MAC 52 is therefore unique for User A and his PIN, the TIC of terminal 9, the account number$_1$ of User A, the account number$_2$ (to which transfer is to be made), the dollars to be transferred, the random number generated by the terminal 9, and the date and time of the transaction. The terminal 9 now encrypts the MAC plus the random number 48 (as previously generated) with the WK$_2$ in the DES module 26 to produce an output code 54 which may comprise a 64-bit number. Note that the banking institution was not required to be in contact with terminal 9 to produce the output code 54 for this transaction.

The transaction may now be communicated 56 to the banking institution by optional means such as telephone, mail, telegram, etc., without security constraints imposed upon the communication. User A thus transmits 56 to the banking institution his Terminal Identification Code, the account number$_1$, the account number$_2$, the dollars to be transferred between such accounts, the date and time, and the output code 54. This transmission 56 may be accomplished in clear text since unauthorized interception of the transmission will not yield useful information. Alternatively, this transmission to the banking institution may be suitably encoded for transmission with enhanced security.

At the banking institution, the TIC is retrieved from the transmitted data and is compared in the bank list 8 for the corresponding KEK for that terminal 9. The account number$_1$ is compared with the bank list 8 for the corresponding PIN of User A (which, of course, with the corresponding account number$_1$ may be encrypted by the same irreversible algorithm 30 to yield PVN). The banking institution may now encrypt 40 the KEK and PVN accessed from the bank list 8 for User A in a DES module in accordance with the same encryption scheme 32 previously used in terminal 9 in order to produce the corresponding WK$_2$. Then, the 64-bit output code 54 retrieved from the information communicated to the banking institution is decrypted 60 using WK$_2$ and a decryption scheme which corresponds to the encryption scheme 51 to produce the corresponding MAC and random number previously generated in terminal 9. Next, the banking institution can encrypt 58 in a DES module the random number, the PVN and the KEK using the same encryption scheme 34 previously used in terminal 9 to produce a corresponding WK$_1$. The banking institution now has all the corresponding entries and can encrypt 61 in a DES module according to the encryption scheme 36 previously used in terminal 9 the resulting WK$_1$, the account number$_1$, the account number$_2$, the dollars to be transferred, and the date and time data was retrieved from the communication 56. This encryption 61 produces the corresponding MAC that is unique with respect to (a) the KEK, the PIN (or PVN) and the account number$_1$ listed for User A, and with respect to (b) the output code, the TIC, the account number$_1$, the account number$_2$, the dollars to be transferred, and the date and time information retrieved from the communication 56 was received at the banking institution. If all of these elements of the transaction are received unaltered, then the MAC from encryption scheme 61 and the MAC from decryption scheme 60 should compare favorably 65. If any element of the transaction is altered, either because of erroneous transmission and reception or because of unauthorized alterations, or the like, then the two MAC signals will differ and the transaction will be aborted by the banking institution.

Upon favorable comparison 65, the banking institution may then perform diverse data checks 67 for such details as balance in account number$_1$, date and time of transaction used before, frequency of transactions, transaction limits, and the like before completing the requested transaction. If a confirmation of the completed transaction is desired, a return message or indication may be provided in a number of different ways. For example, a portion of the MAC, say, the 20 least-significant bits thereof may be segregated and transmitted 70 back to User A by any suitable, unsecured communication means. Transactions which are to be aborted for unfavorable comparison of MAC's, or for unacceptable data checks, or the like, may simply serve to shift the segregated bits of the MAC that are returned to User A. The User A may enter the received message into his terminal 9 where it will be compared 72 with the fixed corresponding portion of the MAC 52 originally generated. Favorable comparison at terminal 9 would therefore constitute indication that all message elements were acceptable, were properly transmitted, received and were acted upon by the banking institution. Unfavorable comparison 72 due, for example, to comparison of one portion of the MAC of terminal 9 with a shifted (other) portion of the MAC from the banking institution would provide indication that some element of the proposed transaction was unacceptable, or improperly transmitted or received and therefore not acted upon by the banking institution.

It should be understood that, as used herein, "banking institution" includes any depositary of units or elements such as parts in inventory, dollars on deposit, and the like. Also, it should be understood that other transaction codes such as limit the account, stop payment order, or the like, may be used in place of specifying transfer to another account number (or name). Also, it should be understood that temporary registers in memory means may be used in conventional manner to store the resulting codes developed by successive encryption procedures in order to facilitate serial operation of one DES module 26 on successive sets of input codes and keys.

Therefore, the present invention facilitates the off-line operation of a portable terminal to provide randomly-coded, secured instructions over unsecured communication channels to an associated institution. The institution can perform security checks on the basis of stored information without the need for interaction with the terminal, and can respond to the instructions without directly requesting the randomizing data. Additional features of the present invention provide secured return messages which can be transmitted over unsecured communication channels to the terminal for entry and detection therein as confirmation of transmission, reception and implementation of the secured instructions.

## Claims

1. Method of securely communicating transaction information to an entity at one location from a user assigned to an identified terminal at a remote location using unsecured communication channels, with the steps of
   a) storing a key code (KEK) in the terminal;
   b) storing in the entity the key code (KEK) and data regarding the user and the terminal (PIN, PVN, TIC, ACCOUNT NO.);
   c) generating a random number (RN) in the terminal;
   **characterized** by the steps of
   d) forming a first encoding key (WK$_1$) and a second encoding key in the terminal, said first encoding (WK$_1$) key being the first logical encoding combination of the random number (RN), and the stored key code (KEK) and data regarding the user (PVN), and the second encoding key (WK$_2$) being the second logical encoding combination of the stored key code (KEK) and data regarding the user (PVN);
   e) encoding in the terminal the transaction information (ACCT #1, ACCT #2, DOLLARS, DATE/TIME) and the first encoding key (WK$_1$) containing the data regarding the user (PVN) in accordance with a third logical encoding combination thereof to form a message authentication code (MAC);
   f) encrypting in the terminal a message authentication code (MAC) and the random number (RN) and the second encoding key-

(WK$_2$) in accordance with a fourth logical encoding combination thereof to form an output code;

g) communicating the output code and transaction information (ACCT #1, ACCT #2, DOLLARS, DATE/TIME) and terminal identity (TIC) to the entity;

h) accessing the storage in the entity in response to received terminal identity to provide the key code associated there with (KEK) and the data regarding the user (PVN) assigned thereto;

i) forming a second encoding key (WK$_2$) in the entity as said logical encoding combination of the accessed key code (KEK) stored in the entity and the accessed data regarding the user (PVN);

j) decrypting in the entity the received output code and said second encoding key (WK$_2$) in accordance with said fourth logical encoding combination to provide the message authentication code (MAC) and the random number (RN);

k) encoding in the entity said random number and said key code (KEK) and said data regarding the user (PVN) stored therein in accordance with said first logical encoding combination to form a first encoding key (WK$_1$);

l) encoding in the entity the transaction information (ACCT #1, ACCT #2, DOLLARS, DATE/TIME) and the first encoding key (WK$_1$) containing the data regarding the user (PVN) in accordance with a third logical encoding combination thereof to form a message authentication code (MAC).

m) comparing in the entity said decrypted message authentication code (MAC) and said encoded message authentication code (MAC) for producing in response to favorable comparison thereof an output indication of unaltered receipt of transaction information from an authorized user of the identified terminal.

2. The method according to claim 1, **characterized** by the additional steps of:

transmitting a selected portion of the message authentication code in the entity to the terminal at the remote location in response to said output indication; and

comparing in the terminal the corresponding selected portion of the message authentication code produced therein with the selected portion of message authentication code received at the remote location to provide an indication thereat of unaltered receipt of transaction information at the entity.

3. The method of claim 1 or 2, **characterized** by the step of storing in the terminal and in the entity a terminal identification code for identifying the terminal assigned to the user at the remote location.

4. The method according to one of claim 1 to 3, **characterized** in that the steps of encoding and encrypting according to the first, second, third and fourth logical encoding combinations of the respective data, codes, numbers and keys are performed in selected sequence in the terminal, and the respective keys and codes formed thereby are stored in the terminal.

5. System for securely communicating transaction information to an entity at one location from a user assigned to an identified terminal at a remote location, comprising:

first storage means (27) in the terminal (9) for storing a key code at an accessible location therein;

second storage means (41) in the entity for storing at accessible locations therein the key code and data regarding the user and the terminal;

means (10) in the terminal (9) for generating a random number (48);

encryption means (32,34,36,51) in the terminal operable to encode signals applied thereto according to selected logical encoding combinations thereof **characterized** in that said encryption means (32,34,36,51) are adapted for selectively:

a) encoding (at 34) said key code, said random number and data indicative of the assigned user in accordance with a first logical encoding combination thereof to produce a first working key signal (WK$_1$(44));

b) encoding (at 32) said key code and said data indicative of the assigned user in accordance with a second logical encoding combination thereof to produce a second working key signal (WK$_2$(46));

c) encoding (at 36) said first working key signal, data indicative of the assigned user, and transaction information in accordance with a third logical encoding combination thereof to produce a message authentication code (MAC 52); and

d) encoding (at 51) said random number (RN), said second working key signal and said message authentication code in accordance with a fourth logical encoding combination thereof to produce an output code (54) for communicating to said entity with the transaction information and terminal identity;

means coupled to the second storage means in said entity for accessing the stored key and the data indicative of the assigned user in response to identity of the terminal;

encoding/decoding means (40,58,60,61) in the entity operable to encode/decode signals applied thereto according to selected logical encoding/decoding combinations thereof for selectively:

e) encoding (at 40) the accessed key code and data indicative of the assigned user in accordance with said second logical encoding combination thereof to produce a second working key signal (WK$_2$);

f) decoding (at 60) the received output code and said second working key signal in accordance with said fourth logical encoding combination to produce said random number and said message authentication code;

g) encoding (at 58) said accessed key code and data indicative of the assigned user and said decoded random number in accordance with said first logical encoding combination thereof to produce said first working key signal (WK$_1$); and

h) encoding (at 61) the received transaction information and said first working key signal and the data indicative of the assigned user in accordance with said third logical encoding combination thereof to produce a message authentication code; and

comparator means (65) in said entity for comparing said decoded message authentication code and said encoded message authentication code for producing in response to favorable comparison thereof an output indication of unaltered receipt of transaction information from an authorized user of the identified terminal.

6. The system according to claim 5, **characterized** by means in the entity for providing to the terminal at the remote location a portion of a message authentication code produced at the entity; and

means in the terminal for comparing a selected portion of the message authentication code produced in the terminal with the portion of message authentication code received from the entity for producing an output indication of unaltered transmission and receipt of transaction information at the entity.

**Revendications**

1. Procédé de communication en sécurité d'informations de transaction vers une entité à un premier emplacement à partir d'un utilisateur affecté à un terminal identifié à un emplacement éloigné utilisant des canaux de communication non-sécurisés, comprenant les étapes suivantes :

a) mémoriser un code de clef (KEK) dans le terminal ;

b) mémoriser dans l'entité le code de clef (KEK) et des données concernant l'utilisateur et le terminal (PIN, PVN, TIC, ACCT #) ;

c) générer un nombre aléatoire (RN) dans le terminal ;

caractérisé en ce qu'il comprend les étapes suivantes :

d) former une première clef de codage (WK$_1$) et une seconde clef de codage (WK$_2$) dans le terminal, la première clef de codage (WK$_1$) étant une première combinaison logique de codage du nombre aléatoire (RN), et du code de clef mémorisé (KEK) et des données concernant l'utilisateur (PVN), et la seconde clef de codage (WK$_2$) étant une seconde combinaison logique de codage du code de clef (KEK) mémorisé et des données concernant l'utilisateur (PVN) ;

e) coder dans le terminal les informations de transaction (ACCT #1, ACCT #2, DOLLARS, DATE/HEURE) et la première clef de codage (WK$_1$) contenant les données concernant l'utilisateur (PVN) selon une troisième combinaison logique de codage de celles-ci pour former un code d'authentification de message (MAC) ;

f) crypter dans le terminal un code d'authentification de message (MAC) et le nombre aléatoire (RN) et la seconde clef de codage (WK$_2$) selon une quatrième combinaison logique de codage pour former un code de sortie ;

g) communiquer le code de sortie et les informations sur la transaction (ACCT #1, ACCT #2, DOLLARS, DATE/HEURE) et l'identité du terminal (TIC) à l'entité ;

h) accéder à la mémoire dans l'entité en réponse à l'identité de terminal reçue pour fournir les données concernant l'utilisateur affecté à celui-ci ;

i) former une seconde clef de codage (WK$_2$) dans l'entité en tant que dite combinaison logique de codage du code de clef (KEK) mémorisé dans l'entité et des données auxquelles on a accédé concernant l'utilisateur (PVN) ;

j) décrypter dans l'entité le code de sortie reçu et la seconde clef de codage (WK$_2$)

selon la quatrième combinaison logique de codage pour fournir le code d'authentification de message (MAC) et le nombre aléatoire (RN) ;

k) coder dans l'entité le nombre aléatoire et le code de clef (KEK) et les données concernant l'utilisateur (PVN) mémorisées dans celle-ci selon la première combinaison logique de codage pour former une première clef de codage (WK$_1$) ;

l) coder dans l'entité les informations de transaction (ACCT #1, ACCT #2, DOLLARS, DATE/HEURE) et la première clef de codage (WK$_1$) contenant les données concernant l'utilisateur (PVN) selon une troisième combinaison logique codage de celle-ci pour former un code d'authentification de message (MAC) ;

m) comparer dans l'entité le code d'authentification de message décrypté (MAC) et le code d'authentification de message codé (MAC) pour produire en réponse à une comparaison favorable une indication de sortie de réception non altérée des informations de transaction en provenance d'un utilisateur autorisé du terminal identifié.

2. Procédé selon la revendication 1, caractérisé par les étapes supplémentaires suivantes :

émettre une partie choisie du code d'identification de message dans l'entité vers le terminal à l'emplacement éloigné en réponse à ladite indication de sortie ; et

comparer dans le terminal la partie sélectionnée correspondante du code d'authentification de message qui y est produit avec la partie sélectionnée du code d'authentification de message reçu à l'emplacement éloigné pour fournir une indication au niveau de celui-ci d'une réception non altérée des informations de transaction au niveau l'entité.

3. Procédé selon la revendication 1 ou 2, caractérisé par l'étape consistant à mémoriser dans le terminal et dans l'entité un code d'identification de terminal pour identifier le terminal affecté à l'utilisateur à l'emplacement éloigné.

4. Procédé selon l'une des revendications 1 à 3, caractérisé en ce que les étapes de codage et de cryptage selon les première, deuxième, troisième et quatrième combinaisons logiques de codage des données, codes, nombres et clefs respectifs sont réalisées selon une séquence choisie dans le terminal et les clefs et codes respectifs ainsi formés sont mémorisés dans le terminal.

5. Système pour communiquer en sécurité des informations de transaction à une entité à un premier emplacement à partir d'un utilisateur affecté à un terminal identifié à un emplacement éloigné comprenant :

des premiers moyens de mémoire (27) dans le terminal (9) pour mémoriser un code de clef au niveau d'un emplacement accessible de celui-ci ;

des seconds moyens de mémoire (41) dans l'entité pour mémoriser à des emplacements accessibles de celui-ci le code de clef et des données concernant l'utilisateur et le terminal ;

des moyens (10) dans le terminal (9) pour produire un nombre aléatoire (48) ;

des moyens de cryptage (32, 34, 36, 51) dans le terminal pouvant fonctionner pour coder des signaux qui lui sont appliqués selon des combinaisons logiques choisies de codage de celui-ci, caractérisé en ce que les moyens de cryptage (32, 34, 36, 51) sont adaptés à sélectivement :

a) coder (en 34) le code de clef, le nombre aléatoire et les données indicatives de l'utilisateur affecté selon une première combinaison logique de codage pour fournir un premier signal de clef de travail (WK$_1$ (44));

b) coder (en 32) le code de clef et les données indicatives de l'utilisateur affecté selon une deuxième combinaison logique de codage pour produire un second signal de clef de travail (WK$_2$) (46)) ;

c) coder (en 36) le premier signal de clef de travail, les données indicatives de l'utilisateur affecté et des informations de transaction selon une troisième combinaison logique de codage pour produire un code d'authentification de message (MAC 52) ; et

d) coder (en 51) le nombre aléatoire (RN), le second signal de clef de travail et le code d'authentification de message selon une quatrième combinaison logique de codage pour produire un code de sortie (54) à communiquer à l'entité avec les informations de transaction et l'identité de terminal ;

des moyens couplés aux seconds moyens de mémoire dans l'entité pour accéder à la clef mémorisée et aux données indicatives de l'utilisateur affecté en réponse à l'identité du terminal ;

des moyens de codage/décodage (40, 58, 60, 61) dans l'entité pouvant fonctionner pour coder/décoder des signaux qui leur sont appliqués selon des combinaisons logiques choisies de codage/décodage pour sélectivement :

e) coder (en 40) le code de clef auquel on accédé et des données indicatives de l'utilisateur affecté selon la deuxième combinaison logique de codage pour produire un second signal de clef de travail (WK$_2$) ;

f) décoder (en 60) le code de sortie reçu et le second signal de clef de travail selon la quatrième combinaison logique de codage pour produire le nombre aléatoire et le code d'identification de message ;

g) coder (en 58) le code de clef auquel on a accédé et les données indicatives de l'utilisateur affecté et du nombre aléatoire décodé selon la première combinaison logique de codage pour produire le premier signal de clef de travail (WK$_1$) ; et

h) coder (en 61) les informations de transaction reçues et le premier signal de clef de travail et les données indicatives de l'utilisateur affecté selon la troisième combinaison logique de codage pour produire un code d'authentification de message ; et

des moyens comparateurs (65) dans l'entité pour comparer le code d'authentification de message codé produire en réponse à une comparaison favorable une indication de sortie de la réception non-altérée des informations de transaction à partir d'un utilisateur autorisé du terminal identifié.

6. Système selon la revendication 5, caractérisé par : des moyens dans l'entité pour fournir au terminal à l'emplacement éloigné une partie d'un code d'authentification de message produit au niveau de l'entité ; et

des moyens dans le terminal pour comparer une partie sélectionnée du code d'authentification de message produit dans le terminal à la partie du code d'authentification de message reçue à partir de l'entité pour produire une indication de sortie de l'émission et de la réception non altérées des informations de transaction au niveau de l'entité.

**Ansprüche**

1. Verfahren zum gesicherten Übermitteln von Transaktionsinformationen an eine an einem Standort befindliche Station von einem Benutzer, dem ein bestimmtes, an einem entfernt liegenden Standort befindliches Endgerät zugeordnet ist, wobei ungesicherte Übertragungskanäle verwendet werden, mit den Schritten

a) Speichern eines Schlüsselcodes (KEK) in dem Endgerät;

b) Speichern des Schlüsselcodes (KEK) und Speichern von Daten, die den Benutzer und das Endgerät betreffen (PIN, PVN, TIC, ACCOUNT NO.), in der Station;

c) Erzeugen einer Zufallszahl (RN) in dem Endgerät;

**gekennzeichnet durch** die Schritte

d) Bilden eines ersten codierten Schlüssels (WK$_1$) und eines zweiten codierten Schlüssels in dem Endgerät, wobei der erste codierte Schlüssel (WK$_1$) die erste logische Codierungskombination der Zufallszahl (RN) und des gespeicherten Schlüsselcodes (KEK) und der Daten (PVN), die den Benutzer betreffen, bildet, und der zweite codierte Schlüssel (WK$_2$) die zweite logische Codierungskombination des gespeicherten Schlüsselcodes (KEK) und der Daten (PVN), die den Benutzer betreffen, bildet;

e) Codieren der Transaktionsinformationen (ACCT#1, ACCT#2, DOLLARS, DATE/TIME) und des ersten codierten Schlüssels (WK$_1$), der die Daten (PVN) enthält, die den Benutzer betreffen, gemäß einer dritten logischen Codierungskombination in dem Endgerät, um einen Nachrichtenberechtigungscode (MAC) zu bilden;

f) Verschlüsseln eines Nachrichtenberechtigungscodes (MAC) und der Zufallszahl (RN) und des zweiten codierten Schlüssels (WK$_2$) gemäß einer vierten logischen Codierungskombination in dem Endgerät, um einen Ausgangscode zu bilden;

g) Übermitteln des Ausgangscodes und der Transaktionsinformation (ACCT#1, ACCT#2, DOLLARS, DATE/TIME) und der Endgeräteidentifikation (TIC) an das Endgerät;

h) Zugreifen auf den Speicher in der Station entsprechend der empfangenen Endgeräteidentifikation, um den zugeordneten Schlüsselcode (KEK) und die Daten (PVN), die den Benutzer betreffen, zur Verfügung zu stellen;

i) Bilden eines zweiten codierten Schlüssels (WK$_2$) in der Station als die logische Codierungskombination des zugegriffenen Schlüsselcodes (KEK), der in der Station gespeichert ist, und der zugegriffenen Daten (PVN), die den Benutzer betreffen;

j) Entschlüsseln des empfangenen Ausgangscodes und des zweiten codierten Schlüssels (WK$_2$) gemäß der vierten logischen Codierungskombination in der Station, um den Nachrichtenberechtigungscode (MAC) und die Zufallszahl (RN) zur Verfügung zu stellen;

k) Codieren der Zufallszahl sowie des Schlüsselcodes (KEK) und der Daten (PVN), die den Benutzer betreffen, was in der Station gespeichert ist, gemäß der ersten logischen Codierungskombination in der Station, um einen ersten codierten Schlüssel (WK$_1$) zu bilden;

l) Codieren der Transaktionsinformationen (ACCT#1, ACCT#2, DOLLARS, DATE/TIME) und des ersten codierten Schlüssels (WK$_1$), der die Daten (PVN) enthält, die den Benutzer betreffen, gemäß einer dritten logischen Codierungskombination in der Station, um einen Nachrichtenberechtigungscode (MAC) zu bilden;

m) Vergleichen in der Einrichtung des entschlüsselten Nachrichtenberechtigungscodes (MAC) und des codierten Nachrichtenberechtigungscodes (MAC), um bei positivem Vergleichsergebnis eine Ausgangsanzeige des unveränderten Empfangs der Transaktionsinformationen von einem befugten Benutzer des bestimmten Endgerätes zu erzeugen.

2. Verfahren nach Anspruch 1, **gekennzeichnet durch** die zusätzlichen Schritte:

Aussenden eines ausgewählten Abschnittes des Nachrichtenberechtigungscodes in der Station an das an einem entfernten Standort befindliche Endgerät in Abhängigkeit von der Ausgangsanzeige; und

Vergleichen des entsprechenden ausgewählten Abschnitts des im Endgerät erzeugten Nachrichtenberechtigungscodes mit dem ausgewählten Abschnitt des Nachrichtenberechtigungscodes, der an dem entfernt liegenden Standort erhalten wurde, in dem Endgerät um eine Anzeige des unveränderten Empfangs von Transaktionsinformationen in der Station bereitzustellen.

3. Verfahren nach Anspruch 1 oder 2, **gekennzeichnet durch** den Schritt des Speicherns eines Endgeräteidentifikationscodes in dem Endgerät und in der Station zum Identifizieren des Endgerätes, das einem Benutzer an dem entfernt liegenden Standort zugeordnet worden ist.

4. Verfahren nach einem der Ansprüche 1 bis 3, **dadurch gekennzeichnet**, daß die Schritte des Codierens und Verschlüsselns entsprechend der ersten, zweiten, dritten und vierten logischen Codierungskombination der entsprechenden Daten, Codes, Zahlen und Schlüsseln in ausgewählter Folge in dem Endgerät durchgeführt werden und die entsprechenden so gebildeten Schlüssel und Codes in dem Endgerät gespeichert werden.

5. Anordnung zum gesicherten Übermitteln von Transaktionsinformationen an eine an einem Standort befindliche Station von einem Benutzer, dem ein bestimmtes, an einem entferntliegenden Standort befindliches Endgerät zugeordnet ist, mit:

einer ersten Speichereinrichtung (27) in dem Endgerät (9) zum Speichern eines Schlüsselcodes an einem zugreifbaren Speicherplatz;

einer zweiten Speichereinrichtung (41) in der Station zum Speichern des Schlüsselcodes und von Daten, die den Benutzer und das Endgerät betreffen, an zugreifbaren Speicherplätzen;

einer Einrichtung (10) in dem Endgerät (9) zum Erzeugen einer Zufallszahl (48);

Codierungseinrichtungen (32, 34, 36, 51) in dem Endgerät, die zum Codieren von darauf aufgegebenen Signalen entsprechend ausgewählter logischer Codierungskombinationen betreibbar sind, **dadurch gekennzeichnet**, daß die Codierungseinrichtungen (32, 34, 36, 51) so ausgelegt sind, daß sie wahlweise:

a) den Schlüsselcode, die Zufallszahl und die den zugeordneten Benutzer bezeichnenden Daten gemäß einer ersten logischen Codierungskombination codieren (bei 34), um ein erstes Arbeitsschlüsselsignal (WK$_1$ - (44)) zu erzeugen;

b) den Schlüsselcode und die den zugeordneten Benutzer bezeichnenden Daten gemäß einer zweiten logischen Codierungskombination codieren (bei 32), um ein zweites Arbeitsschlüsselsignal (WK$_2$ (46)) zu erzeugen;

c) das erste Arbeitsschlüsselsignal, die den zugeordneten Benutzer bezeichnender Daten und Transaktionsinformationen gemäß einer dritten logischen Codierungskombination codieren (bei 36), um einen Nachrichtenberechtigungscode (MAC 52) zu erzeugen; und

d) die Zufallszahl (RN), das zweite Arbeitsschlüsselsignal und den Nachrichtenberechtigungscode gemäß einer vierten logischen Codierungskombination zu codieren (bei 51), um einen Ausgangscode (54) zu erzeugen, der an die Station mit der Transaktionsinformation und der Endgeräteidentifikation übermittelt wird;

daß eine mit der zweiten Speichereinrichtung gekoppelte Vorrichtung in der Station vorgesehen ist, um auf den gespeicherten Schlüssel und die den zugeordneten Benutzer bezeichnenden Daten in Abhängigkeit von der Identität des Endgerätes zuzugreifen;

daß Codierungs/Decodierungseinrichtungen (40, 58, 60, 61) in der Station vorgesehen sind, die zum Codieren/Decodieren von darauf aufgegebenen Signalen entsprechend einer ausgewählten logischen Codierungs/Decodierungskombination betreibbar sind, um wahlweise:

e) den zugegriffenen Schlüsselcode und die den zugeordneten Benutzer bezeichnenden Daten gemäß der zweiten logischen Codierungskombination zu codieren (bei 40), um ein zweites Arbeitsschlüsselsignal (WK$_2$) zu erzeugen;

f) den empfangenen Ausgangscode und das zweite Arbeitsschlüsselsignal gemäß der vierten logischen Codierungskombination zu decodieren (bei 60), um die Zufallszahl und den Nachrichtenberechtigungscode zu erzeugen;

g) den zugegriffenen Schlüsselcode und die den zugeordneten Benutzer bezeichnenden Daten und die decodierte Zufallszahl gemäß der ersten logischen Codierungskombination zu codieren (bei 58), um das erste Arbeitsschlüsselsignal (WK$_1$) zu erzeugen; und

h) die empfangenen Transaktionsinformationen und das erste Arbeitsschlüsselsignal und die den zugeordneten Benutzer bezeichnenden Daten gemäß der dritten logischen Codierungskombination zu codieren (bei 61), um einen Nachrichtenberechtigungscode zu erzeugen; und

daß eine Vergleichseinrichtung (65) in der Station vorgesehen ist, um den decodierten Nachrichtenberechtigungscode und den codierten Nachrichtenberechtigungscode zu vergleichen, um bei positivem Vergleichsergebnis eine Ausgangsanzeige des unveränderten Empfangs von Transaktionsinformationen von einem befugten Benutzer an das bestimmte Endgerät zu erzeugen.

6. Anordnung nach Anspruch 5, **gekennzeichnet durch** Vorrichtungen in der Station zum Liefern eines Abschnitts eines in der Station erzeugten Nachrichtenberechtigungscodes an das an einem entfernten Standort befindliche Endgerät; und

Vorrichtungen in dem Endgerät zum Vergleichen eines ausgewählten Abschnitts des in dem Endgerät erzeugten Nachrichtenberechtigungscodes mit dem Abschnitt des von der Station empfangenen Nachrichtenberechtigungscodes, um eine Ausgangsanzeige der unveränderten Übertragung und des unveränderten Empfangs von Transaktionsinformationen in der Station zu erzeugen.

(TERMINAL)

Figure 1

(ENTITY)

| FIGURE 2A | FIGURE 2B |

Figure 2

Figure 2A (TERMINAL)

FROM 1-2A

**1**

**BANK LIST:**

USER 'A": USER B
  PIN (OR PVN)
  TIC
  KEK
  ACCOUNT NO.

**8**

TO 2-2A

**2**

TIC → KEK
ACCOUNT #1 → PVN

**ACCESS LIST**

**RETRIEVE TIC
&
ACCOUNT NO.**

**40**

**ENCRYPT**

↓ WK$_2$

**60**

**RETRIEVE
OUTPUT LOGIC**

**DECRYPT**

MAC

RN

PVN

**58**

**ENCRYPT**

↓ WK$_1$

KEK

**61**

**RETRIEVE:
ACCT #1 : ACCT #2
DOLLARS: DATE/TIME**

**ENCRYPT**

MAC

**65**

COMP
?

ABORT

NO

YES

**67**

**DATA CHECKS**

COMPLETE
TRANSACTION

TO 56

**SEGMENT
AND TRANSMIT**

SHIFT

**70**

TO 3-2A

**3**

**Figure 2 B** (ENTITY)